# EUROPEAN PATENT APPLICATION

(11) **EP 1 348 526 A1**
(43) Date of publication of application: **01.10.2003**
(21) Application number: 03251871.4
(22) Date of filing: 25.03.2003
(51) Int. Cl.: B27C 1/10, B23Q 11/00

(54) **Planer**

(30) Priority: 29.03.2002 CN 02229840 U
(71) Applicant: Positec Power Tools (Suzhou) Co. Limited, Suzhou 215008 (CN)
(72) Inventor: Wang, Xin, Pingjiang District of Suzhou (CN)
(74) Representative: Stuttard, Garry Philip

(57) **Abstract**

The present invention relates to a handheld planer with a chip-ejecting duct (12) whose chip ejecting direction is changeable.

## Description

The present invention relates to a handheld planer with a chip-ejecting duct whose chip-ejecting direction is changeable.

Handheld planers are used widely in woodwork and frequently operate by means of a rotary blade which cuts the wood surface producing many wood chips which need to be ejected from the housing of the planer. The difficulties of producing a satisfactory means for ejecting chips produced during use has been largely unresolved for some time. One conventional planer (US-A-5815934) has a valve disposed in the chip-ejecting duct. There are two passages and two outlets on the chip-ejecting duct and the two passages do not open simultaneously. The air passes through the whole length of the chip-ejecting duct and takes the chips away. Although its function is good, the structure of this planer is complicated. Another handheld planer (US-A-5383275) achieves chip ejection by a duct with an inserting plate. There is a bevel on the duct and openings on the bevel. Airflow from the air passage passes through the openings on the bevel and changes direction before entering into the duct. The air takes the chips away during this flow. This planer can achieve a changeable chip ejecting direction but is not so convenient during operation. The chip ejecting effect of the left side of the structure is quite different from the chip ejecting effect of the right side of the structure.

The present invention seeks to improve the chip-ejecting properties of a handheld planer by providing a chip-ejecting duct whose chip-ejecting direction is changeable. More particularly, the chip-ejecting duct comprises inlets for incoming airflow and inlets for incoming chips which respectively communicate with the outlet for outgoing airflow and outlet for exhausting chips on the remainder of the planer. The chip-ejecting duct is rotatable about its axis and contains internally a plate which guides airflow and chips to one of two outlets for ejecting chips in opposite directions before and after rotation.

Thus viewed from one aspect the present invention provides a planer comprising:
a driving motor for driving a planer head supported in a housing;
a fan connected to the driving motor for generating an airflow passing through an air compartment;
an outlet for outgoing airflow in the wall of the air compartment;
an outlet for exhausting chips from the housing;
a chip-ejecting duct for guiding the airflow between the outlet for outgoing airflow and a first or second outlet for ejecting chips, wherein:
   a plate is disposed in the chip-ejecting duct,
   inlets for incoming airflow from the outlet for outgoing airflow and inlets for incoming chips from the outlet for exhausting chips are disposed in the wall of the chip-ejecting duct arranged respectively on opposing vertical sides of the plate,
   the chip-ejecting duct is operably connected to the outlet for outgoing airflow such that chips are carried from the housing through the chip-ejecting duct by the airflow and out of the first outlet and
   the chip-ejecting duct is rotatable about its axis through a certain angle (typically by about 180°) so as still to be operably connected with the outlet for outgoing airflow such that chips are carried from the housing through the chip-ejecting duct by the airflow and out of the second outlet.

The chip-ejecting duct of the planer of the present invention serves to conveniently change the direction of chip ejection whilst being suitable for operators who have different operating customs. The structure of the planer of the present invention is very simple and has a large ventilation area. Perfect chip exhausting effect may be obtained and by exploiting the direction changeable chip-ejecting duct the user range of the planer is optimized allowing it to be used in various circumstances whilst being able to alleviate the tiredness of the user. The airflow produced by rotation of the fan advantageously blows through a first pathway in the chip-ejecting duct even when the plate blocks off the second pathway so that chip accumulation is avoided.

The planer head typically comprises a tool blade and a blade shank.

In an embodiment of the invention, the planer further comprises one or more of: a transmission strap, a button for adjusting cutting depth, an adjustable base and a motor output shaft.

In a preferred embodiment, the plate is tilt disposed in the chip-ejecting duct and is a thin planar plate, wherein the two ends of the plate bend towards the wall of the chip-ejecting duct and sealingly connect therewith such that the plate divides the chip-ejecting duct into two compartments and forms two chip ejecting passages extending into the first and second outlets for ejecting chips.

By dividing the chip-ejecting duct into left and right compartments so as to form two chip ejecting passages extending into the first and second outlets for ejecting chips, the inlets for incoming airflow and the inlets for incoming chips are arranged respectively on the two sides of the plate in the vertical direction and the chip-ejecting duct can rotate through a certain angle about its axis such that the chip-ejecting direction of the planer can conveniently and advantageously be changed.

In a preferred embodiment, the connecting positions of the upper end and lower end of the plate are arranged at the two sides of the outlet for outgoing airflow and the outlet for exhausting chips. The plate is just positioned above the outlet for outgoing airflow and the outlet for exhausting chips when the inlets for incoming airflow and the inlets for incoming chips communicate with the outlet for outgoing airflow and the outlet for exhausting chips.

In a preferred embodiment, the horizontal width of the inlets for incoming airflow is not larger than the horizontal width of the outlet for outgoing airflow and the length of the inlets for incoming airflow is smaller than or equal to the length of the outlet for outgoing airflow.

By making the size of the inlets for incoming airflow smaller than the size of the outlet for outgoing airflow and by positioning the plate at the convergence point of the plate and the chip-ejecting duct, airflow from the fan can blow around the working portion of the said chip-ejecting duct and so obtain a perfect chip ejecting effect.

In a preferred embodiment, the inlets for incoming airflow are symmetrically staggered on each side of the plate in the vertical direction, the inlets for incoming airflow being positioned at the convergence point of the plate and the chip-ejecting duct. One of the inlets just communicates with one portion of the outlet for outgoing airflow when the plate is above the outlet for outgoing airflow and outlet for exhausting chips. The other one of the inlets for incoming airflow just communicates with the other portion of the outlet for outgoing airflow after the chip-ejecting duct rotates through a certain angle about its axis (*eg* by about 180°).

In a preferred embodiment, the length and the width of the inlets for incoming chips is not smaller than the length and the width of the outlet for exhausting chips.

In a preferred embodiment, the inlets for incoming chips are symmetrically disposed on two sides of the plate in the vertical direction. One of the inlets for incoming chips just communicates with the outlet for exhausting chips when the plate is above the outlet for outgoing airflow and the outlet for exhausting chips. The other one of the inlets for incoming chips just communicates with the outlet for outgoing chips after the chip-ejecting duct rotates through a certain angle about its axis (*eg* by about 180°).

In a preferred embodiment, the planer further comprises a ring member for moving along the chip-ejecting duct and limiting the position of the chip-ejecting duct on the remainder of the planer. The ring member also operably connects the chip-ejecting duct to the remainder of the planer after the chip-ejecting duct rotates through a certain angle about its axis (*eg* by about 180°).

The present invention will now be described in a non-limitative sense with reference to the accompanying Figures in which:
FIG. I shows a partially broken side view of an embodiment of the planer of the present invention;
FIG. 2 shows a sectional view along the line L-L of FIG. 1;
FIG. 3 shows the structure of the chip-ejecting duct of the present invention (*ie* shows a cross-sectional view along the line P-P of FIG. 1); and
FIG. 4 shows a sectional view along the line Q-Q of FIG. 3.

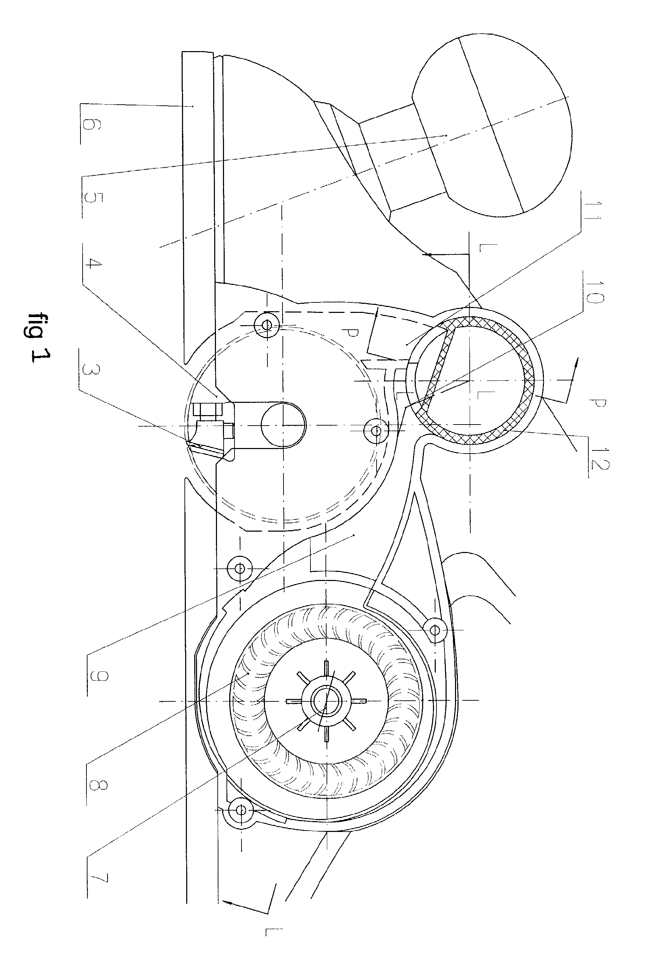

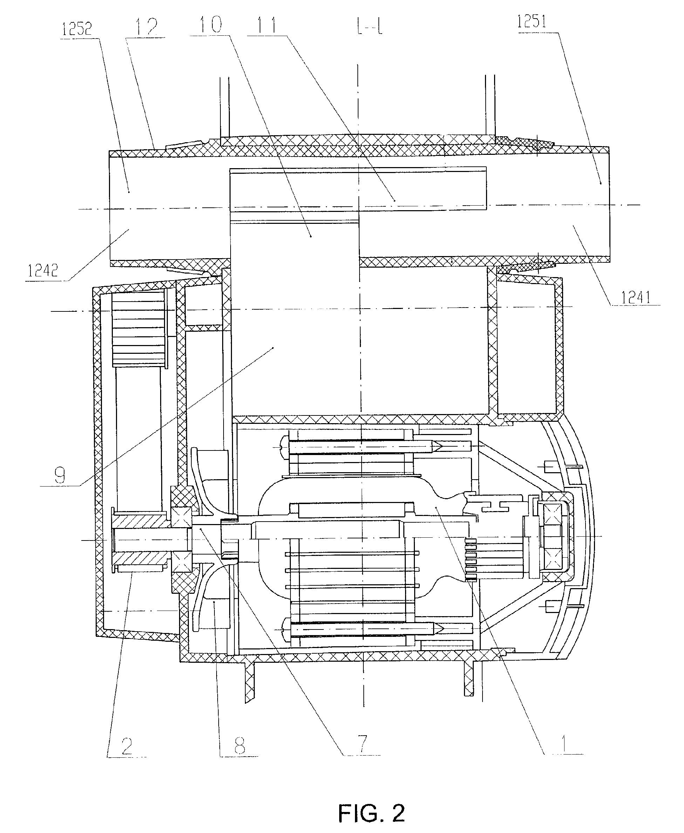

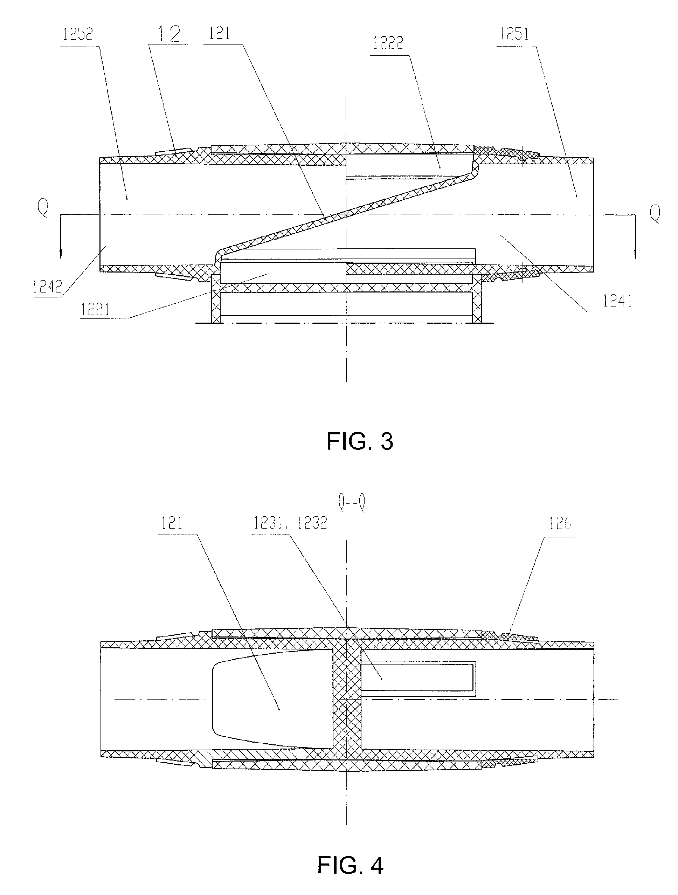

An embodiment of the handheld planer of the invention shown in Figures 1 and 2 comprises a driving motor (1), a transmission strap (2), a tool blade (3), a blade shank (4), a button (5) for adjusting cutting depth, an adjustable base (6), a motor output shaft (7) on which is mounted a fan (8) for generating airflow, an air compartment (9) in the wall of which is disposed an outlet (10) for outgoing airflow, an outlet (11) for exhausting chips and a chip-ejecting duct (12). In the wall of the chip-ejecting duct (12), there are inlets (1221,1222 - Figure 3) for incoming airflow from the outlet (10) for outgoing airflow and inlets (1231,1232 - Figure 4) for incoming chips from the outlet (11) for exhausting chips. The chip-ejecting duct (12) operably connects to the remainder of the planer and can rotate about its own axis (*eg* by about 180°).

As seen in Figures 3 and 4, a plate (121 in Figure 4) in the chip-ejecting duct (12) divides the chip-ejecting duct (12) into left and right compartments. The plate (121) is a thin planar member and is tilt-arranged in the chip-ejecting duct (12). The upper and lower ends of the plate (12) bend towards and substantially sealing connect to the wall of the chip-ejecting duct (12) such that the chip-ejecting duct (12) is divided into left and right compartments to form two chip ejecting passages (1241,1242) extending into two outlets (1251, 1252) for ejecting chips. The connecting positions of the upper and lower ends of plate (121) are related to the positions of the outlet (10) for outgoing airflow and the outlet (11) for exhausting chips. The plate (121) is above the outlet (10) for outgoing airflow and outlet (11) for exhausting chips when the inlets (1221, 1222) for incoming airflow and the inlets (1231, 1232) for incoming chips communicate with the outlet (10) for outgoing airflow and the outlet (11) for exhausting chips.

The horizontal width of the inlets (1221, 1222) for incoming airflow isless than or equal to the horizontal width of the outlet (10) for outgoing airflow. The length of the inlets (1221, 1222) for incoming airflow is less than the length of the outlet (10) for outgoing airflow. The inlets (1221, 1222) for incoming airflow are symmetrically staggered on each side of the plate (121) in the vertical direction and the position of the inlets (1221, 1222) for incoming airflow is nearest to the convergence point of the plate (121) and the chip-ejecting duct (12). One of the inlets (1221, 1222) for incoming airflow just communicates with one portion of the outlet (10) for outgoing airflow when the plate (121) is above the outlet (10) for outgoing airflow and the outlet (11) for exhausting chips. The other of the inlets (1221, 1222) for incoming airflow just communicates with the other portion of the outlet (10) for outgoing airflow after the chip-ejecting duct (12) rotates through a certain angle about its axis (*eg* by about 180°).

The length and horizontal width of the inlets (1231, 1232) for incoming chips is larger than or equal to the length and horizontal width of the outlet (11) for exhausting chips. The inlets (1231, 1232) for incoming chips are symmetrically disposed on two sides of the plate (121) in the vertical direction. One of the said inlets (1231, 1232) for incoming chips communicates with the outlet (11) for exhausting chips when the plate (121) is above the outlet (10) for outgoing airflow and the outlet (11) for exhausting chips. A ring member (126) mounted on the chip-ejecting duct (12) is capable of moving along the chip-ejecting duct (12) to limit the position of the chip-ejecting duct (12) such that the chip-ejecting duct (12) can operably connect to the planer and furthermore can connect to the planer after rotating through an angle about its axis when the other of the inlets (1231, 1232) for incoming chips communicates with the outlet (11) for exhausting chips.

During use, the high speed rotation of the blade shank (4) drives wood chips centrifugally from the housing into the chip-ejecting duct (12). The airflow generated by the fan (8) exits the air compartment (9) through the outlet (10) for outgoing airflow and enters the chip-ejecting duct (12). The inlet (1221) for incoming airflow communicates with the outlet (10) for outgoing airflow when the plate (121) in the chip-ejecting duct (12) is in the position left end lower than the right end, wherein the inlet (1231) for incoming chips communicates with the outlet (11) for exhausting chips and the chips are carried from the right chip ejecting passage (1241) of the chip-ejecting duct (12) by the airflow out of the outlet (1251) of the chip-ejecting duct (12). When the plate (121) is in the position left end higher than the right end after the chip-ejecting duct (12) rotates a certain angle about its axis (*eg* by about 180°), the inlet (1222) for incoming airflow communicates with the outlet (10) for outgoing airflow and the inlet (1231) for incoming chips simultaneously communicates with the outlet (11) for exhausting chips and the chips are carried from the left chip ejecting passage (1242) of the chip ejecting duct (12) by the airflow out of the outlet (1252) of the chip-ejecting duct (12).

## Claims

1. A planer comprising:
a driving motor (1) for driving a planer head supported in a housing;
a fan (8) connected to the driving motor for generating an airflow passing through an air compartment (9);
an outlet for outgoing airflow (10);
an outlet for exhausting chips(11) from the housing;
a chip-ejecting duct (12) comprising:
a plate(121) disposed in the chip-ejecting duct for guiding the airflow between the outlet for outgoing airflow and a first or second outlet (1251, 1252) for ejecting chips,
inlets (1221,1222) for incoming airflow from the outlet for outgoing airflow and inlets (1231,1232) for incoming chips from the outlet for exhausting chips disposed in the wall of the chip-ejecting duct arranged respectively on opposing vertical sides of the plate, wherein
the chip-ejecting duct is operably in communication with the outlet for outgoing airflow such that chips are carried from the housing through the chip-ejecting duct by the airflow and out of the first outlet and
the chip-ejecting duct is rotatable about its axis through a certain angle so as still to be operably in communication with the outlet for outgoing airflow such that chips are carried from the housing through the chip-ejecting duct by the airflow and out of the second outlet.

2. A planer as claimed in claim 1 wherein the plate (121) is a thin planar plate tilt-disposed in the chip-ejecting duct, the upper end and lower end bend towards and up to the wall of the chip-ejecting duct and substantially sealingly connect thereto so that the plate divides the chip-ejecting duct into two compartments and forms two chips ejecting passages (1241,1242) in communication with the first and second outlet.

3. A planer as claimed in claim 1 or 2, wherein the connecting position of the upper and lower ends of the plate corresponds to the positions of the outlet for outgoing airflow and outlet for exhausting chips, wherein the plate is just positioned over the outlet for outgoing airflow and the outlet for exhausting chips when the inlets for incoming airflow and the inlets for incoming chips respectively communicate with the outlet for outgoing airflow and the outlet for exhausting chips.

4. A planer as claimed in claim 1 wherein the horizontal width of the inlets for incoming airflow is less than or equal to the horizontal width of the outlet for outgoing airflow and the length of the inlets for incoming airflow is less than the length of the outlet for outgoing airflow.

5. A planer as claimed in claim 1 or 4, wherein the inlets for incoming airflow are centerally symmetrically disposed on each side of the plate, and the position of the inlets for incoming airflow are nearest to the respective connecting positions of the plate and the chip-ejecting duct, wherein one of the inlets for incoming airflow just communicates with one part of the outlet for outgoing airflow when the plate is over the outlet for outgoing airflow and the outlet for exhausting chips, and the inlets for incoming airflow just communicates with the other portion of the outlet for outgoing airflow after the chip-ejecting duct rotates through a certain angle about its axis.

6. A planer as claimed in claim 1 wherein the length and the horizontal width of the inlets for incoming chips are greater than or equal to the length and the horizontal width of the outlet for exhausting chips.

7. A planer as claimed in claim 1 or 5 wherein the inlets for incoming chips are disposed on each side of the plate and one of the inlets for incoming chips communicates with the outlet for exhausting chips when the plate is over the outlet for exhausting chips and the outlet for outgoing airflow and the other one of the inlets for incoming chips communicates with the outlet for exhausting chips after the chip-ejecting duct rotates through a certain angle about its axis.

8. A planer as claimed in claim I further comprising: a ring member (126) on the chip-ejecting duct.
